# EUROPÄISCHE PATENTSCHRIFT

(11) **EP 4 299 935 B1**
(45) Veröffentlichungstag und Bekanntmachung des Hinweises auf die Patenterteilung: **26.03.2025**
(21) Anmeldenummer: 23178846.4
(22) Anmeldetag: 13.06.2023
(51) Int. Cl.: F16D 3/205

(54) **TRIPODEROLLER FÜR EIN TRIPODEGELENK UND TRIPODEGELENK MIT SOLCHEN**
TRIPOD ROLLER FOR A TRIPOD JOINT AND TRIPOD JOINT HAVING SAME
GALET TRIPODE POUR UN JOINT TRIPODE ET JOINT TRIPODE POURVU DE CE GALET TRIPODE

(30) Priorität: 27.06.2022 DE 102022206419
(43) Veröffentlichungstag der Anmeldung: 03.01.2024
(73) Patentinhaber: VOLKSWAGEN AG, 38440 Wolfsburg (DE)
(72) Erfinder: Mick, Alexander, 38446 Wolfsburg (DE)

(56) Entgegenhaltungen:
- JP-A- 2006 090 515
- JP-A- 2006 266 328
- JP-A- 2016 180 502
- JP-A- 2018 155 377
- JP-A- 2019 124 253

## Beschreibung

Die Erfindung bezieht sich auf einen Tripoderoller für ein Tripodegelenk mit den Merkmalen des Oberbegriffs von Patentanspruch 1. Weiterhin bezieht sich die Erfindung auf ein Tripodegelenk mit solchen Tripoderollern.

Tripoderoller umfassend einen Außenring mit einer ringförmigen Lauffläche an seinem Außenumfang zum Abrollen in einem Tripodegehäuse sowie mit einer Innenumfangsfläche, einen Innenring mit einer ringförmigen Lauffläche an seinem Innenumfang zur Lagerung an einem Zapfen eines Tripodesterns sowie mit einer Außenumfangsfläche und gegenüberliegende Stirnseiten, Wälzkörper, die in einem Ringraum zwischen der Innenumfangsfläche des Außenrings und der Außenumfangsfläche des Innenrings angeordnet sind und über welche der Außenring mit seiner Innenumfangsfläche an der Außenumfangsfläche des Innenrings drehbar gelagert ist, und Axialsicherungsringe, welche an dem Außenring festgelegt sind und den Außenring axial gegenüber dem Innenring sichern, sowie entsprechende Tripodegelenke sind beispielsweise aus DE 10 2009 041 086 A1 und DE 10 2020 212 991 A1 bekannt.

Solche Tripoderoller und Tripodegelenke kommen beispielsweise in Seitenwellen auf der Antriebsseite von Kraftfahrzeugen zum Einsatz. Ihre Hauptfunktionen bestehen in der Momenten- und Leistungsübertragung vom Antrieb zum Rad sowie in der Abbeugung und im Längenausgleich bei gleichzeitigen Lenk- und Federbewegungen sowie Aggregatbewegungen.

Ein gattungsgemäßer Tripoderoller für ein Tripodegelenk mit den Merkmalen des Oberbegriffs von Patentanspruch 1 ist aus JP 2006 090515 A bekannt. Insbesondere lehrt JP 2006 090515 A Schmiermittelausnehmungen an den Stirnseiten des Innenrings in Form gerader Rillen mit konstantem Querschnitt, die den Wälzkörperraum mit einem Zapfenraum verbinden und die radial oder schräg zur Radialrichtung verlaufen oder auch gekreuzt sein können. Ferner werden Schmiermitteltaschen an den Stirnseiten gelehrt, welche jedoch keinen Verbindungskanal zwischen Wälzkörperraum und dem Zapfenraum bereitstellen können.

Um die Schmierung des Kontakts des Innenrings mit den Zapfen des Tripodesterns zu verbessern, wird in JP 2019-124253 A vorgeschlagen, Schmiermitteltaschen an den Stirnseiten des Innenrings sowie an den Innenseiten der Axialsicherungsringe auszubilden. Zweck dieser Taschen ist es, für Mangelsituationen Schmiermittel aufzubewahren, um damit die Kontaktflächen zwischen der Innenumfangsfläche des Innenrings und der Außenumfangsfläche des Zapfens zu schmieren.

Ferner sind aus JP 2006 266328 A verschiedene Rillenformen bekannt, die von der Stirnseite des Innenrings zum Zapfenraum verlaufen, jedoch zur Außenumfangsfläche des Innenrings keine Verbindung haben.

Bei gattungsgemäßen Tripodegelenken treten im Fahrbetrieb insbesondere im Bereich der Tripoderoller hohe Belastungen auf. Dies verschärft sich bei Elektrofahrzeugen durch erhöhte Drehmomente sowie gesteigerte Wechselbelastungen als Folge von Rekuperation.

Insbesondere bei den vorgenannten Doppelrollen mit einem Außenring und einem Innenring sowie zwischen diesen angeordneten Wälzkörpern kann es zu einem hohen Verschleiß zwischen dem Außenring und den Wälzkörpern sowie ferner zwischen dem Innenring und den Wälzkörpern kommen.

Dem kann durch eine entsprechende großzügigere Bemessung der Bauteile abgeholfen werden. Dies führt jedoch zu großen Gelenkbaugrößen, welche im Hinblick auf in der Regel sehr enge Bauräume von modernen Fahrzeugen möglichst vermieden werden sollen.

Ferner könnte erwogen werden, alternative Schmiermittel einzusetzen. Praktische Versuche haben jedoch gezeigt, dass sich hierdurch keine substantielle Lebensdauerverbesserung erzielen lässt.

Vor diesem Hintergrund liegt der Erfindung die Aufgabe zu Grunde, Tripoderoller der eingangs genannten Art zu schaffen, welche bei kompakter Bauweise und hoher Belastung eine verbesserte Lebensdauer aufweisen.

Diese Aufgabe wird durch einen Tripoderoller gemäß Patentanspruch 1 sowie durch ein Tripodegelenk gemäß Patentanspruch 8 gelöst.

Es hat sich gezeigt, dass sich hierdurch die Lebensdauer deutlich verbessern lässt. Über die Ausnehmungen wird trotz praktischer Kapselung des Ringraums durch die Axialsicherungsringe eine verbesserte Schmiermittelzufuhr zu den Kontaktstellen der Wälzkörper mit dem Innenring und dem Außenring erzielt.

Hierdurch kann wiederum der Einsatz größerer Gelenksbaugrößen vermieden werden, wodurch zudem Gewicht eingespart wird.

Die Ausnehmungen lassen sich ohne großen fertigungstechnischen Mehraufwand verwirklichen. Beispielsweise können diese bei der Formgebung des Innenrings berücksichtigt werden, welcher üblicherweise geschmiedet wird.

Besondere Ausführungsarten der Erfindung sind Gegenstand weiterer Patentansprüche.

Vorzugsweise ist die Traglänge der Wälzkörper in Axialrichtung kleiner als die Länge des Innenrings an seiner Außenumfangsfläche in Axialrichtung. Zudem kann die Eintiefung der Ausnehmungen in die Stirnseite an ihrer jeweiligen Mündung in den Ringraum kleiner sein als die Differenz aus der Länge des Innenrings und der Traglänge. Hierdurch bleiben die Festigkeits- und Akustikeigenschaften des Tripoderollers von den Ausnehmungen weitestgehend unbeeinflusst.

Sind die axial einander gegenüberliegenden Stirnseiten des Innenrings jeweils mit Ausnehmungen versehen, empfiehlt es sich, die Eintiefung der Ausnehmungen in die Stirnseite an ihrer jeweiligen Mündung in den Ringraum jeweils kleiner als die Hälfte der Differenz aus der Länge des Innenrings und der Traglänge zu wählen.

Gemäß einer weiteren besonderen Ausführungsart der Erfindung münden die Ausnehmungen an der Stirnseite des Innenrings in die Innenumfangsfläche des Innenrings, wodurch ein Kanal über die gesamte Stirnseite hinweg für den Schmiermitteltransport bereitgestellt wird.

Werden die Ausnehmungen als den Ringraum mit der Innenumfangsfläche des Innenrings verbindende Rillen ausgebildet, welche zu einer Radialrichtung des Innenrings bogenförmig gekrümmt sind, führt durch eine solche in etwa schaufelradförmige Ausgestaltungeine Drehbewegung der Rollen zu einer aktiven Förderwirkung des Schmiermittels und damit zu einer guten Schmierstoffversorgung der Wälzkörper. Im Fahrbetrieb eines Kraftfahrzeugs führen die Tripoderoller eine kontinuierliche oszillierende Abrollbewegung aus. Dabei findet zwischen dem Außenring und dem Innenring eine drehende Relativbewegung statt, welche die Förderwirkung ermöglicht.

Ferner kann die Krümmung der Rillen an den gegenüberliegenden Stirnseiten entgegengesetzt zueinander sein. Durch eine solche gegensinnige Ausführung wird abhängig von der Drehrichtung an einer Seite Schmiermittel zugeführt und an der anderen Seite verbrauchtes" Schmiermittel aus dem Wälzkörperkontakt abgeführt bzw. abgepumpt.

Gemäß einer weiteren besonderen Ausführungsart sind Ausnehmungen zur Aufnahme von Schmiermittel am Axialsicherungsring an einer zu dem Innenring weisenden Innenseite ausgebildet, um Schmiermittel wirkungsvoller zu den Wälzkörpern zu fördern.

Die Ausnehmungen am Axialsicherungsring können beispielsweise Radialrillen umfassen, welche sich von einer Innenkante des Axialsicherungsrings radial zumindest bis auf Höhe des Ringraums erstrecken. Insbesondere können sich diese Radialrillen durchgehend über die gesamte Stirnfläche des Axialsicherung erstrecken oder aber auch als Tasche lediglich bis zur Mitte oder zum letzten Drittel der Ringhöhe.

Weiterhin können die Ausnehmungen die Ausnehmungen am Axialsicherungsring Axialnuten umfassen, welche in den Ringraum münden und schräg oder axial verlaufend an der Innenkante des Axialsicherungsrings ausgebildet sind.

Die Radialrillen sowie die Axialnuten können gemeinsam an einem Axialsicherungsring vorgesehen sein und dabei vorzugsweise, jedoch nicht notwendigerweise, untereinander verbunden sein.

Ein entsprechendes Tripodegelenk zeichnet sich durch eine kompakte Bauweise sowie eine hohe Lebensdauer aus. Es eignet sich insbesondere für hohe Drehmomente und Wechselbelastungen, wie sie in Antrieben von Elektrofahrzeugen auftreten.

Nachfolgend wird die Erfindung anhand eines in der Zeichnung dargestellten Ausführungsbeispiels sowie weiterer Abwandlungen näher erläutert. Die Zeichnung zeigt in:
- Figur 1: eine Längsschnittansicht eines Tripodegelenks mit einem Tripoderoller nach einem Ausführungsbeispiel der Erfindung,
- Figur 2: eine Querschnittsansicht des Tripodegelenks aus Figur 1,
- Figur 3: eine räumliche Ansicht einer ersten Ausführungsvariante eines Tripoderollers nach der Erfindung,
- Figur 4: eine Halbschnittansicht des Tripoderollers aus Figur 3,
- Figur 5: eine räumliche Ansicht einer zweiten Ausführungsvariante eines Tripoderollers nach der Erfindung,
- Figur 6: eine Halbschnittansicht des Tripoderollers aus Figur 5,
- Figur 7: eine räumliche Ansicht einer driten Ausführungsvariante eines Tripoderollers nach der Erfindung,
- Figur 8: eine Halbschnittansicht des Tripoderollers aus Figur 7,
- Figur 9: eine räumliche Ansicht einer vierten Ausführungsvariante eines Tripoderollers zur Veranschaulichung von Ausnehmungen zur Aufnahme von Schmiermittel am Axialsicherungsring,
- Figur 10: eine Halbschnittansicht des Tripoderollers aus Figur 9,
- Figur 11: eine räumliche Ansicht einer fünften Ausführungsvariante eines Tripoderollers zur Veranschaulichung von weiteren Ausnehmungen zur Aufnahme von Schmiermittel am Axialsicherungsring,
- Figur 12: eine Halbschnittansicht des Tripoderollers aus Figur 11,
- Figur 13: eine räumliche Ansicht einer sechsten Ausführungsvariante eines Tripoderollers zur Veranschaulichung von weiteren Ausnehmungen zur Aufnahme von Schmiermittel am Axialsicherungsring, und in
- Figur 14: eine Halbschnittansicht des Tripoderollers aus Figur 13.

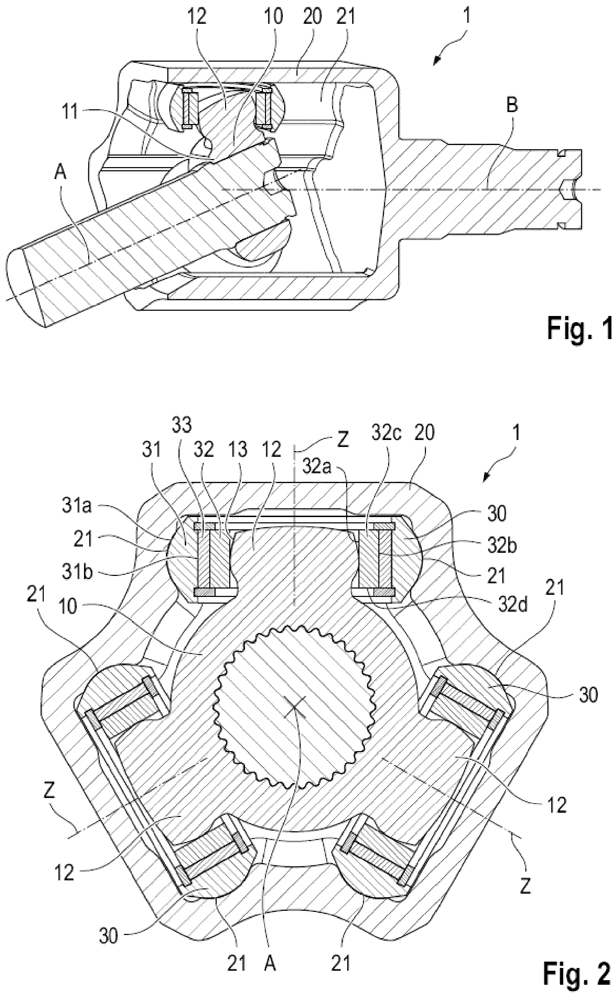

Fig. 1 und 2 zeigen ein mögliches Ausführungsbeispiel für ein Tripodegelenk 1 nach der Erfindung, welches beispielsweise in einer Seitenwelle eines Kraftfahrzeugs als antriebsseitiges Gleichlaufgelenk zum Einsatz kommen kann.

Das Tripodegelenk 1 umfasst ein Gelenkinnenteil in Form eines Tripodesterns 10 mit einer Drehachse A sowie ein Gelenkaußenteil in Form eines Tripodegehäuses 20 mit einer Drehachse B. An dem Gelenkaußenteil sind innenseitig Laufbahnpaare 21 ausgebildet, in welchen das Gelenkinnenteil axial, d.h. in Richtung der Drehachse B geführt ist. Bei gestrecktem Tripodegelenk 1 fluchten die Drehachsen A und B miteinander. Wird das Tripodegelenk 1 im Betrieb gebeugt, schließen diese hingegen einen Beugewinkel ungleich 0° miteinander ein, wie dies in Fig. 1 beispielhaft gezeigt ist.

Der Tripodestern 10 weist einen zentralen Wellenabschnitt 11 sowie mehrere, vorzugsweise drei von dem Wellenabschnitt 11 abstehenden Zapfen 12 auf. Der zentrale Wellenabschnitt 11 kann als Ringkörper ausgeführt sein, welcher mit einer Welle gekoppelt werden kann.

Die Zapfen 12 sind in Umfangsrichtung um die Drehachse A des Gelenkinnenteils bzw. Tripodesterns 10 mit gleichem Abstand zueinander angeordnet. Ihre Längsachsen Z verlaufen im Wesentlichen radial zur Drehachse A und liegen vorzugsweise, wie bei dem dargestellten Ausführungsbeispiel in Fig. 2 gezeigt, in einer gemeinsamen Ebene.

Weiterhin umfasst das Tripodegelenk 1 am Tripodestern 10 je Zapfen 12 einen Tripoderoller 30, welcher am zugehörigen Zapfen 12 des Tripodesterns 10 um die Längsachse Z des Zapfens 12 drehbar gelagert ist.

Die Zapfen 12 weisen zur Lagerung der Tripoderoller 30 jeweils eine profilierte Oberfläche 13 auf, welche weiter unten näher erläutert wird.

Jeder Tripoderoller 30 umfasst einen Außenring 31 und einen Innenring 32 sowie zwischen diesen angeordnete Wälzkörper 33, so dass der Außenring 31 und der Innenring 32 gegeneinander verdreht werden können.

Der Außenring 31 und der Innenring 32 sind vorzugsweise als rotationssymmetrische Bauteile ausgebildet.

Insbesondere weist der Außenring 31 an seinem Außenumfang eine ringförmige Lauffläche 31a zum Abrollen an einem Laufbahnpaar 21 des Tripodegehäuse 20 auf, sowie weiterhin eine Innenumfangsfläche 31b.

Der Innenring 32 weist an seinem Innenumfang eine ringförmige Lauffläche 32a zur Lagerung an dem Zapfen 12 des Tripodesterns 10 auf sowie weiterhin eine Außenumfangsfläche 32b und einander gegenüberliegende Stirnseiten 32c und 32d.

Die Wälzkörper 33, welche vorzugsweise als Nadeln oder Rollen ausgeführt sind, sind in einem Ringraum 34 zwischen der Innenumfangsfläche 31b des Außenrings 31 und der Außenumfangsfläche 32b des Innenrings 32 angeordnet. Der Ringraum 34 verläuft um den Zapfen 12 herum. Über die Wälzkörper 33 ist der Außenring 31 mit seiner Innenumfangsfläche 31b an der Außenumfangsfläche 32b des Innenrings 32 drehbar gelagert. Vorzugsweise weisen die Wälzkörper 33 zur Innenumfangsfläche 31b des Außenrings 31 und zur Außenumfangsfläche 32b des Innenrings 32 jeweils einen Linienkontakt auf.

Ferner sind Axialsicherungsringe 40 vorgesehen, welche an dem Außenring festgelegt 31 sind und den Außenring 31 axial gegenüber dem Innenring 32 sichern. Die Axialsicherungsringe 40 sind für die Montage radial geschlitzt und weisen beispielsweise einen rechteckigen Querschnitt auf. Sie sind in entsprechende Nuten an der Innenumfangsfläche 31b des Außenrings 31 eingesetzt.

Der Ringraum 34 wird durch die Innenseiten 40a der axial beidseitig des Ringraums 34 angeordneten Axialsicherungsringe 40 geschlossen. Die Axialsicherungsringe 40 sorgen auch dafür, dass die Wälzkörper 33 nicht seitwärts aus dem Ringraum 34 herauswandern können.

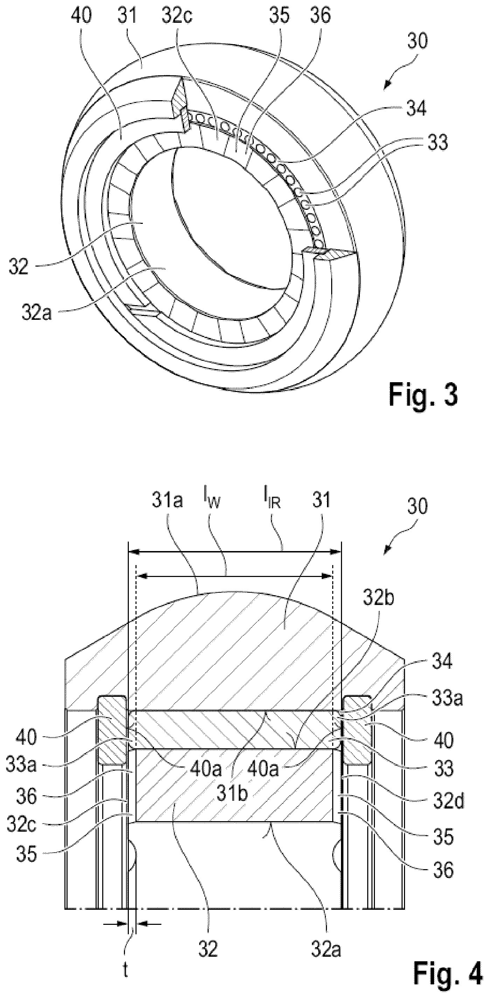

Wie insbesondere die Fig. 4, 6, 8, 10, 12 und 14 zeigen, weisen die Wälzkörper 33 an ihren axialen Enden ballige Endabschnitte 33a auf.

Dadurch ist die Traglänge I_{w} der Wälzkörper 33 in Axialrichtung kleiner als die Länge I_{IR} des Innenrings 32 an seiner Außenumfangsfläche 32b in Axialrichtung.

Jeder Tripoderoller 30 kann mit der ringförmigen Lauffläche 31a seines Außenrings 31 entlang eines Laufbahnpaars 21 des Gelenkaußenteils bzw. Tripodegehäuses 20 abrollen. Das Profil der ringförmigen Lauffläche 31a kann hierzu im Querschnitt ballig nach außen gewölbt sein. Die Laufbahnen des Laufbahnpaars 21 können entsprechend ein konkaves Querschnittsprofil aufweisen, wie dies in Fig. 2 zu erkennen ist.

Der Innenring 32 steht mit seiner Innenumfangsfläche 32a mit dem zugehörigen Zapfen 12 des Tripodesterns 10 in Kontakt.

Der Innenumfangsfläche 32a des Innenrings 32 kann dabei kreiszylindrisch ausgebildet sein.

Innen- und Außenumfänge werde im Sinne der vorliegenden Offenbarung als die betreffenden Oberflächen und nicht als Maßangaben verstanden.

Die profilierte Oberfläche 13 des Zapfens 12 kann in einer Längsschnittebene, welche die Längsachse Z des jeweiligen Zapfens 12 enthält, ballig gewölbt ausgebildet sein.

Aufgrund der balligen Ausgestaltung der Oberfläche 13 des Zapfens 12, mit welcher die Innenumfangsfläche 32a des Innenrings 32 in Kontakt steht, kann bei einer Beugung des Tripodegelenks 1 der Innenring 32 gegenüber der Längsachse Z des zugehörigen Zapfens 12 verkippt werden. Zudem ist eine axiale Verschiebbarkeit in Richtung der Längsachse Z des Zapfens 12 gegeben.

Die Funktionen des Drehens um die Zapfen 12, des Verkippens sowie die axiale Verschiebbarkeit können auch auf andere Art und Weise verwirklicht werden. Die in Fig. 1 und 2 dargestellte Ausführung einer drehbaren Lagerung in mehrere Richtungen zur Ermöglichung einer Taumelbewegung stellt lediglich eine Möglichkeit für ein Tripoderoller 30 dar, die zum Zweck der Veranschaulichung der Funktion eines solchen angegeben wird.

Das Gelenkaußenteil bzw. Tripodegehäuse 20 weist für jeden Tripoderoller 30 einen eigenen Eingriffsabschnitt auf. Der Eingriffsabschnitt ist beispielsweise hülsenartig ausgebildet und kann über seine Axiallänge ein konstantes Querschnittsprofil aufweisen.

Bei dem in Fig. 1 und 2 dargestellten Ausführungsbeispiel weist der Eingriffsabschnitt an seinem Innenumfang parallel zur Drehachse B des Tripodegehäuses 20 verlaufende Laufbahnpaare 21 mit einander in Umfangsrichtung gegenüberliegenden Laufbahnen auf. Diese Laufbahnen stehen mit der Lauffläche 31a am Außenumfang des jeweiligen Tripoderollers 30 in Eingriff, wobei je nach Drehrichtung und Betriebssituation eine der Laufbahnen 21 am Tripodegehäuse 20 lasttragend und die gegenüberliegende Laufbahn entlastet ist. Die Laufbahnen 21 am Tripodegehäuse 20 verlaufen vorzugsweise jeweils parallel zur Drehachse B des Tripodegehäuse 20.

Durch eine Profilierung sowohl der Laufbahnen 21 am Tripodegehäuse 20 als auch ringförmigen Laufflächen 31a der Außenringe 31 der Tripoderoller 30 wird bewirkt, dass bei einer Drehung des Gelenks 1 unter Beugung der Bauteilachsen A und B zueinander die Tripoderoller 30 achsparallel zur Drehachse B des Tripodegehäuses 20 hin und her bewegt werden. Ein hierfür benötigter Schwenkfreiheitsgrad kann beispielsweise zwischen den Zapfen 12 und den Innenringen 32 der Tripoderoller 30 bereitgestellt werden, wie dies oben bereits erläutert wurde.

Zur Verbesserung der Lebensdauer der Tripoderoller 30 weist, wie in den Fig. 3 bis 8 beispielhaft gezeigt, der Innenring 32 an mindestens einer seiner Stirnseiten 32c, 32d Ausnehmungen 35 zur Aufnahme von Schmiermittel auf. Die Ausnehmungen 35 in den Stirnseiten 32c, 32d sind dabei derart konfiguriert, dass diese in den Ringraum 34 münden, in welchem die Wälzkörper 33 angeordnet sind, um die Wälzkörper 33 mit Schmiermittel versorgen.

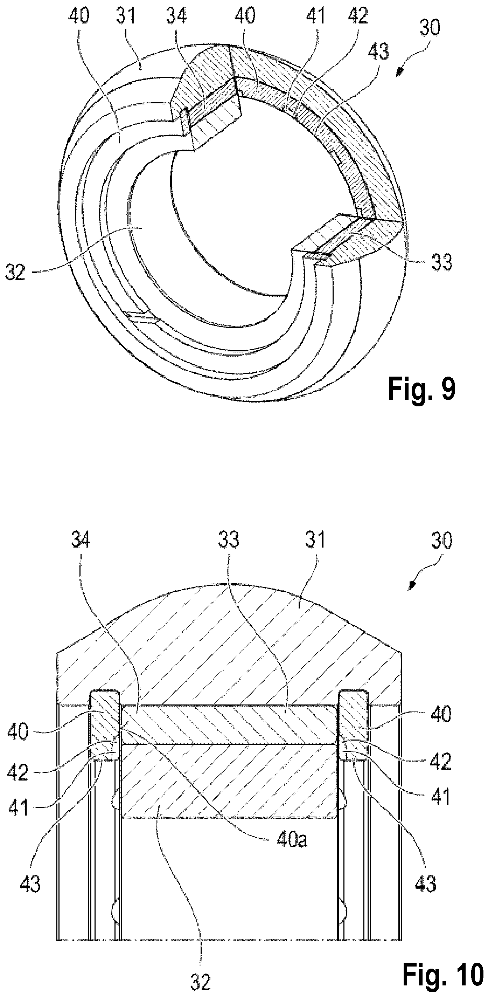

In weiteren Varianten kann, wie in den Fig. 9 bis 14 beispielhaft gezeigt, mindestens einer der Axialsicherungsringe 40 Ausnehmungen 41 zur Aufnahme von Schmiermittel aufweisen, wobei die Ausnehmungen 41 wiederum in den Ringraum 34 münden, in welchem die Wälzkörper 33 angeordnet sind, um die Wälzkörper 33 mit Schmiermittel versorgen.

Beide Maßnahmen, nämlich innenringseitige Ausnehmungen 35 und axialsicherungsringseitige Ausnehmungen 41 können miteinander kombiniert werden. Die Ausnehmungen 35 und 41 sind vorliegend vorzugsweise Vertiefungen in den jeweiligen Flächen 32c, 32d und 40a und 43.

Im Folgenden sollen diesbezüglich besonders geeignete Ausführungsvarianten näher erläutert werden, ohne dass die Erfindung auf diese konkreten Varianten beschränkt wäre. Insbesondere können auch Kombinationen der nachfolgenden Ausführungsvarianten verwirklicht werden, so dass an einem Innenring 32 und/oder einem Axialsicherungsring 40 Ausnehmungen 35 bzw. 41 unterschiedlicher Ausführungsvarianten vorgesehen sind.

Die Figuren 3 und 4 zeigen eine erste Ausführungsvariante mit Ausnehmungen 35 an den Stirnseiten 32c und 32d des Innenrings 32. Die Ausnehmungen 35 sind hierbei als Rillen 36 mit einem in Längsrichtung der jeweiligen Rille 36 vorzugsweise konstanten Querschnitt ausgebildet. Diese Rillen 36 münden nicht nur in den Ringraum 34, schneiden also nicht nur die Außenumfangsfläche 32b des Innenrings 32 an, sondern münden gleichzeitig auch in die Innenumfangsfläche 32a des Innenrings 32 und schneiden diese damit an. Auf diese Weise kann Schmiermittel über die Ausnehmungen 35 bzw. Rillen 36 von außerhalb in den ansonsten umschlossenen Ringraum 34 gelangen, um die Wälzkörper 33 zu schmieren.

Wie insbesondere Figur 4 entnommen werden kann, werden die Ausnehmungen 35 bevorzugt an beiden axialen Stirnseiten 32c, 32d vorgesehen. Die Traglänge I_{w} der Wälzkörper 33 wird dabei in Axialrichtung vorzugsweise kleiner als die Länge I_{IR} des Innenrings 32 an seiner Außenumfangsfläche 32b in Axialrichtung gewählt. Zudem wird die Eintiefung t der Ausnehmungen 35 in die Stirnseite 32c, 32d an ihrer jeweiligen Mündung in den Ringraum 34 vorzugsweise jeweils kleiner als die Hälfte der Differenz aus der Länge I_{IR} des Innenrings 32 und der Traglänge I_{W} gewählt.

In Abwandlung hiervon kann, insbesondere dann, wenn lediglich eine Stirnseite 32c, 32d mit Ausnehmungen 35 versehen werden soll, jedoch auch generell, die Eintiefung t der Ausnehmungen 35 in die Stirnseite 32c, 32d an ihrer jeweiligen Mündung in den Ringraum 34 auch so gewählt werden, dass diese kleiner ist als die Differenz aus der Länge I_{IR} des Innenrings 32 und der Traglänge I_{W}.

Es ist weiterhin möglich, die Eintiefungen t der Ausnehmungen 35 noch tiefer als vorstehend genannt auszuführen und dadurch eine lokal reduzierte Traglänge zwischen dem Innenring 32 und den Wälzkörpern 33 in Kauf zu nehmen. Durch die verstärkte Eintiefung wird die wirksame Traglänge I_{W} der Wälzkörper 33 eingeschränkt. Dies ist akzeptabel, solange in Bezug auf die Lebensdauer der Vorteil einer verbesserten Schmiermittelzufuhr den Nachteil der reduzierten Traglänge überwiegt.

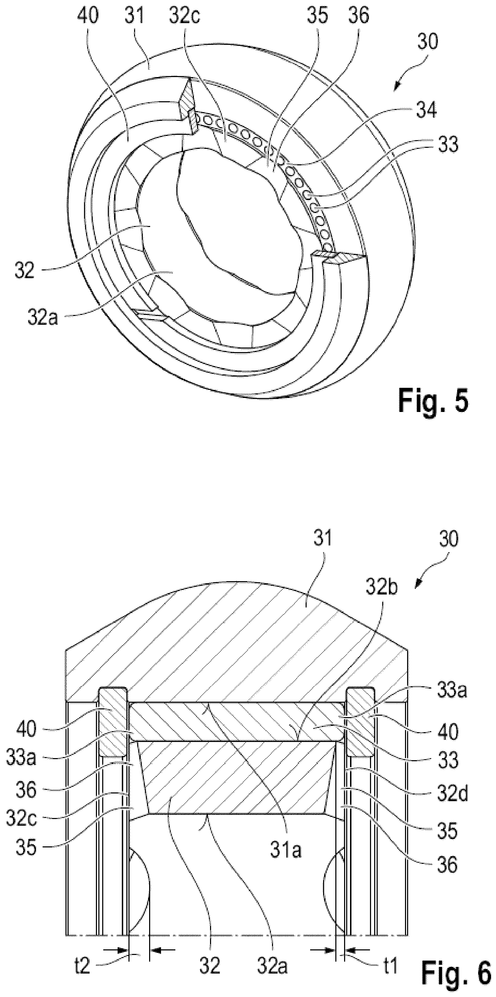

Die Fig. 5 und 6 zeigen eine zweite Ausführungsvariante mit Ausnehmungen 35 an den Stirnseiten 32c und 32d des Innenrings 32. Die Ausnehmungen 35 sind hierbei wiederum als Rillen 36 ausgebildet, welche jedoch im Vergleich zu der Ausführungsvariante in den Fig. 3 und 4 zur Ebene der jeweiligen Stirnseite 32c und 32d nicht parallel verlaufen, sondern vielmehr angeschrägt sind. Geeignete Anschrägungswinkel zur Ebene liegen im Bereich von 5 bis 20°.

Die Ausnehmungen 35 können beispielsweise an ihrer Mündung in die Innenumfangsfläche 32a des Innenrings 32 stärker eingetieft sein, als an ihrer Mündung in den Ringraum 34. Wie insbesondere in Figur 6 zu erkennen ist, ist die Eintiefung t₂ an der Mündung in die Innenumfangsfläche 32a größer als die Eintiefung t₁ an der Mündung in den Ringraum 34.

In Abwandlung hiervon können die Ausnehmungen 35 an der Stirnseite 32c, 32d des Innenrings 32 an ihrer Mündung in den Ringraum 34 stärker in die Stirnfläche 32c, 32d eingetieft sein als an ihrer Mündung in die Innenumfangsfläche 32a des Innenrings 32. In diesem Fall ist t₁ größer als t₂.

Zudem kann, wie insbesondere Fig. 5 entnommen werden kann, die Breite der Rillen 36 von der Mündung in die Innenumfangsfläche 32a des Innenrings 32 zu der Mündung in den Ringraum 34 abnehmen.

Diese beiden Maßnahmen - unterschiedliche Eintiefung einerseits und unterschiedliche Breite andererseits - können in Kombination, jedoch auch unabhängig voneinander verwirklicht werden.

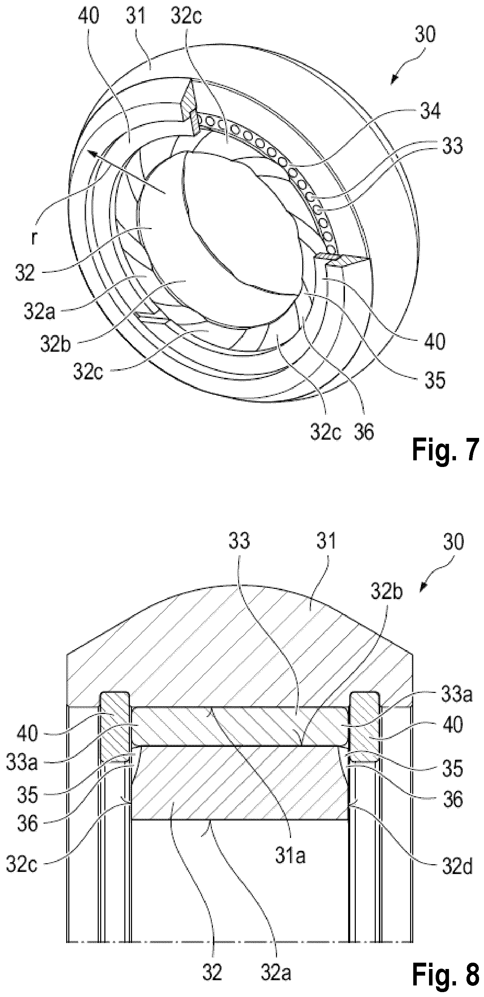

Die Fig. 7 und 8 zeigen im Rahmen einer dritten Ausführungsvariante ein weiteres Gestaltungsmerkmal, welches mit den vorstehend erläuterten Gestaltungsmerkmalen für die Ausnehmungen 35 kombiniert werden kann.

Wie Fig. 7 entnommen werden kann, können die Ausnehmungen 35 der Stirnseiten 32c, 32d als den Ringraum 34 mit der Innenumfangsfläche 32a des Innenrings 32 verbindende Rillen 36 ausgebildet sein, welche zu einer Radialrichtung r des Innenrings 32 bogenförmig gekrümmt sind. Die Krümmung erfolgt in der Ebene der jeweiligen Stirnseite 32c, 32d.

In Blickrichtung senkrecht auf die Stirnseite 32c ergibt sich eine schaufelradförmige Ausgestaltung der Ausnehmungen 35. Diese bewirkt bei einem Drehen der Tripoderoller 30 eine aktive Förderwirkung für den Schmierstoff. Da im Fahrbetrieb die Tripoderoller 30 Tripoderoller eine kontinuierliche oszillierende Abrollbewegung führen, findet zwischen dem Außenring 31 und dem Innenring 32 ständig eine drehende Relativbewegung statt, welche die Förderwirkung für den Schmierstoff ermöglicht, um Schmierstoff von außerhalb in den Ringraum 34 einzutragen.

Werden an einem Innenring 32 an den beiden gegenüberliegenden axialen Stirnseiten 32c und 32d die schaufelradförmigen Ausnehmungen 35 gegensinnig ausgeführt, wirkt, abhängig von der Drehrichtung, eine Seite Schmiermittel zuführend und die andere Seite Schmiermittel abführend. Hierdurch kann eine sehr gute Schmierstoffversorgung der Wälzkörper 32 und deren Kontaktstellen mit dem Außenring 31 und dem Innenring 32 erfolgen.

Wie bereits erwähnt, kann die Ausgestaltung der Rillen 36, welche in den Fig. 7 und 8 lediglich beispielhaft mit konstantem Querschnitt dargestellt sind, entsprechend den vorstehend erläuterten Ausführungsvarianten modifiziert werden.

Ferner ist es möglich, in Abwandlung der Darstellung von Fig. 7 auch gegensinnig gekrümmte Rillen an derselben Stirnseite 32c bzw. 32d vorzusehen.

Die Fig. 9 und 10 zeigen eine vierte Ausführungsvariante zur Verbesserung der Schmierstoffversorgung, bei welcher 41 für den Transport von Schmiermittel am Axialsicherungsring 40 vorgesehen sind.

Bei der vierten Ausführungsvariante sind diese Ausnehmungen 41 an einer zu dem Innenring 32 weisenden Seite 40a des Axialsicherungsring 40 ausgebildet, um Schmiermittel wirkungsvoll zu den Wälzkörpern 33 zu fördern.

Diese Ausnehmungen 41 am Axialsicherungsring 40 umfassen vorliegend Radialrillen 42, welche sich von einer Innenkante 43 des Axialsicherungsrings 40 radial zumindest bis auf Höhe des Ringraums 34 erstrecken.

In Fig. 9 und 10 erstrecken sich die Radialrillen 42 von der Innenkante 43 vorzugsweise bis zur Mitte oder zum letzten Drittel der Ringhöhe des Axialsicherungsring 40 in Radialrichtung.

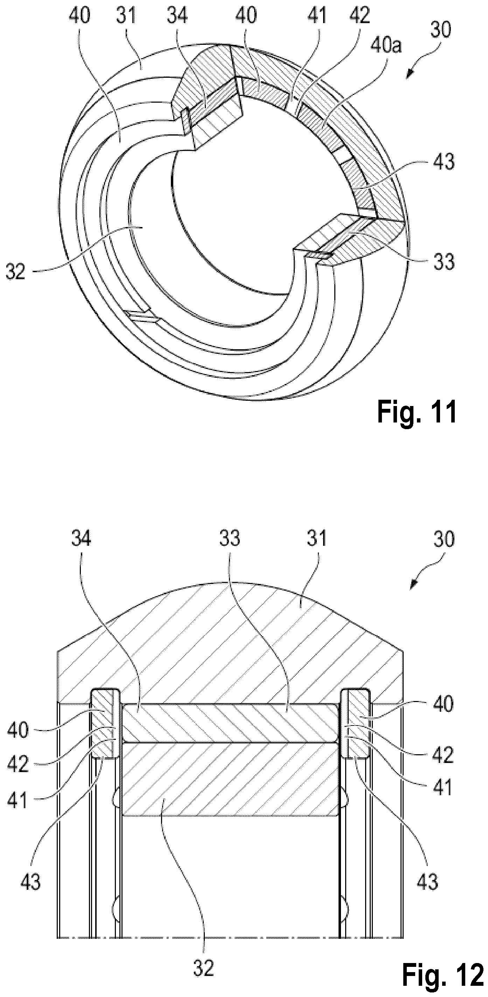

Es ist jedoch auch möglich, wie im Rahmen einer fünften Ausführungsvariante in Fig. 11 und 12 gezeigt, dass sich Radialrillen 42 durchgehend über die gesamte zum Innenring 32 und zum Ringraum 34 weisende Innenseite 40a des jeweiligen Axialsicherungsring 40 erstrecken.

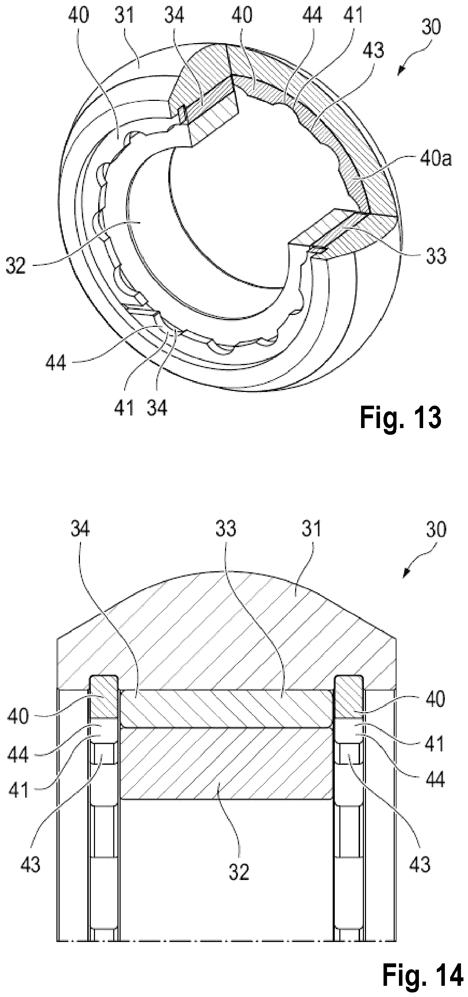

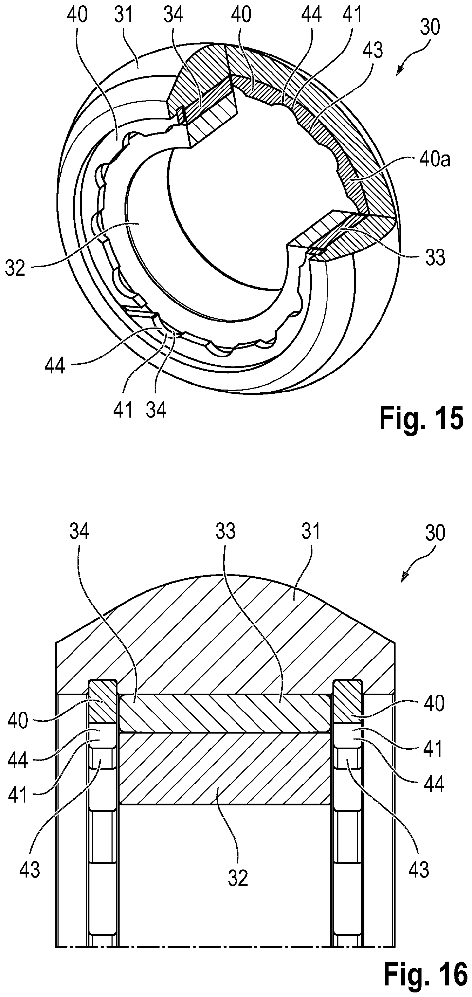

Weiterhin können die Ausnehmungen 41 am Axialsicherungsring 40 Axialnuten 44 umfassen, wie dies in einer sechsten Ausführungsvariante in Fig. 13 und 14 dargestellt ist. Diese Axialnuten 44 sind derart in die Innenkante 43 des Axialsicherungsring 40 eingeschnitten, dass diese zum Zweck der externen Schmiermittelversorgung in den Ringraum 34 münden. Die Axialnuten 44 können dabei vorzugsweise axial verlaufend, d.h. parallel zur Längsmittelachse des Axialsicherungsring 40, an der Innenkante 43 des Axialsicherungsring 40 ausgebildet sein. Es ist jedoch auch möglich, diese gegenüber einem solchen Axialverlauf etwas schräg anzustellen, beispielsweise in einem Winkelbereich von bis zu 30°.

Die Radialrillen 42 sowie die Axialnuten 44 können gemeinsam an einem Axialsicherungsring 40 vorgesehen sein. Dabei können diese gegebenenfalls untereinander verbunden sein. Es ist jedoch auch möglich, diese unverbunden nebeneinander anzuordnen.

Es hat sich gezeigt, dass sich durch die vorstehend erläuterten Modifikationen am Tripoderoller 30 die Lebensdauer eines Tripodegelenks 1 ohne Zunahme des Bauteilgewichts und der Außenabmessungen überraschend deutlich verbessern lässt. Hierdurch lassen sich kompakte Tripodegelenke 1 mit hohen Traglasten verwirklichen.

Aufgrund der verbesserten Lebensdauereigenschaften eignen sich die vorstehend erläuterten Tripodegelenke insbesondere für Kraftfahrzeuge mit Elektroantrieb sowie vergleichbaren Antriebsbedingungen mit hohen Drehmomenten und starker Wechselbelastung. Die Festigkeits- und Akustikeigenschaften der Tripoderoller 30 bleiben unbeeinträchtigt.

Die erfindungsgemäße Modifikation lässt sich zudem ohne großen technischen Mehraufwand umsetzen.

So kann die Ausbildung von Ausnehmungen 35 am Innenring 32 beispielsweise in einen Schmiedeprozess zu dessen Herstellung integriert werden. Der fertigungstechnische Zusatzaufwand bleibt in diesem Fall minimal, da lediglich das Schmiedewerkzeug anzupassen ist.

Die Ausbildung von zusätzlichen Ausnehmungen 41 am Axialsicherungsring 40 lässt sich sehr einfach durch eine zusätzliche Stufe beim Stanzprozess für den Axialsicherungsring 40 verwirklichen.

Die Erfindung wurde vorstehend anhand eines Ausführungsbeispiels und weiterer Abwandlungen näher erläutert. Insbesondere können technische Einzelmerkmale, welche oben im Kontext weiterer Einzelmerkmale erläutert wurden, unabhängig von diesen sowie in Kombination mit weiteren Einzelmerkmalen verwirklicht werden, auch wenn dies nicht ausdrücklich beschrieben ist, solange dies technisch möglich ist. Die Erfindung ist daher ausdrücklich nicht auf die beschriebenen Ausführungsbeispiele und Abwandlungen beschränkt, sondern umfasst alle durch die Patentansprüche definierten Ausgestaltungen.

### Bezugszeichenliste

| | | | |
|---|---|---|---|
| 1 | Tripodegelenk | 36 | Rille |
| 10 | Tripodesterns (Gelenkinnenteil) | 40 | Axialsicherungsring |
| 11 | Wellenabschnitt | 40a | Innenseite |
| 12 | Zapfen | 41 | Ausnehmung am Axialsicherungsring |
| 13 | Oberfläche des Zapfens | | |
| 20 | Tripodegehäuse (Gelenkaußenteil) | 42 | Radialrille |
| 21 | Laufbahn | 43 | Innenkante |
| 30 | Tripoderoller | 44 | Axialnut |
| 31 | Außenring | A | Drehachse des Tripodesterns (Gelenkinnenteils) |
| 31a | Lauffläche/Außenumfangsfläche des Außenrings | | |
| | | B | Drehachse des Tripodegehäuses (Gelenkaußenteils) |
| 31b | Innenumfangsfläche des Außenrings | | |
| | | Z | Zapfenachse |
| 32 | Innenring | I_{W} | Tragbreite des Wälzkörpers |
| 32a | Lauffläche/Innenumfangsfläche des Innenrings | I_{IR} | Länge der Innenumfangsfläche des Innenrings in Axialrichtung |
| | | | |
| 32b | Außenumfangsfläche des Innenrings | r | Radialrichtung |
| | | t | Eintiefung |
| 32c | Stirnfläche des Innenrings | t1 | Eintiefung der Mündung in den Ringraum |
| 32d | Stirnfläche des Innenrings | | |
| 33 | Wälzkörper | t2 | Eintiefung der Mündung in die Innenumfangsfläche des Innenrings |
| 33a | Endabschnitt | | |
| 34 | Ringraum | | |
| 35 | Ausnehmung an der Stirnfläche | | |

## Patentansprüche

1. Tripoderoller (30) für ein Tripodegelenk (1), umfassend
einen Außenring (31) mit einer ringförmigen Lauffläche (31a) an seinem Außenumfang zum Abrollen in einem Tripodegehäuse (20) sowie mit einer Innenumfangsfläche (31b), einen Innenring (32) mit einer ringförmigen Lauffläche (32a) an seinem Innenumfang zur Lagerung an einem Zapfen (12) eines Tripodesterns (10) sowie mit einer Außenumfangsfläche (32b) und gegenüberliegende Stirnseiten (32c, 32d),
Wälzkörper (33), die in einem Ringraum (34) zwischen der Innenumfangsfläche (31b) des Außenrings (31) und der Außenumfangsfläche (32b) des Innenrings (32) angeordnet sind und über welche der Außenring (31) mit seiner Innenumfangsfläche (31b) an der Außenumfangsfläche (32b) des Innenrings (32) drehbar gelagert ist, und
Axialsicherungsringe (40), welche an dem Außenring (31) festgelegt sind und den Außenring (31) axial gegenüber dem Innenring (32) sichern,
wobei der Innenring (32) an mindestens einer seiner Stirnseiten (32c, 32d) Ausnehmungen (35) zur Aufnahme von Schmiermittel aufweist, die Ausnehmungen (35) an der Außenumfangsfläche (32b) des Innenrings (32) in den Ringraum (34) münden, in welchem die Wälzkörper (33) angeordnet sind, um die Wälzkörper (33) mit Schmiermittel versorgen, und ferner besagte Ausnehmungen (35) an der Außenumfangsfläche (32b) des Innenrings (32) in die Innenumfangsfläche (32a) des Innenrings (32) münden,
**dadurch gekennzeichnet, dass**
die Ausnehmungen (35) an der Stirnseite (32c, 32d) des Innenrings (32) an ihrer Mündung in den Ringraum (34) stärker in die Stirnseite (32c, 32d) des Innenrings (32) eingetieft sind als an ihrer Mündung in die Innenumfangsfläche (32a) des Innenrings (32); oder
die Ausnehmungen (35) an der Stirnseite (32c, 32d) des Innenrings (32) als Rillen (36) ausgebildet sind, welche an ihrer Mündung in die Innenumfangsfläche (32a) des Innenrings (32) stärker in die Stirnseite (32c, 32d) eingetieft sind als an ihrer Mündung in den Ringraum (34); und/oder
die Breite der Rillen (36) von der Mündung in die Innenumfangsfläche (32a) des Innenrings (32) zu der Mündung in den Ringraum (34) abnimmt;
oder dass die Ausnehmungen (35) als den Ringraum (34) mit der Innenumfangsfläche (32a) des Innenrings (32) verbindende Rillen (36) ausgebildet sind, welche zu einer Radialrichtung (r) des Innenrings (32) bogenförmig gekrümmt sind.

2. Tripoderoller (30) nach Anspruch 1, **dadurch gekennzeichnet, dass** die Traglänge (I_{w}) der Wälzkörper (33) in Axialrichtung kleiner ist als die Länge (I_{IR}) des Innenrings (32) an seiner Außenumfangsfläche (32b) in Axialrichtung, und dass die Eintiefung (t) der Ausnehmungen (35) in die Stirnseite an ihrer jeweiligen Mündung in den Ringraum (34) kleiner ist als die Differenz aus der Länge des Innenrings (32) und der Traglänge (I_{w}).

3. Tripoderoller (30) nach Anspruch 1, **dadurch gekennzeichnet, dass** die axial einander gegenüberliegenden Stirnseiten (32c, 32d) des Innenrings (32) jeweils mit Ausnehmungen (35) versehen sind, die Traglänge (I_{w})der Wälzkörper (33) in Axialrichtung kleiner ist als die Länge (I_{IR}) des Innenrings (32) an seiner Außenumfangsfläche (32b) in Axialrichtung, und dass die Eintiefung (t) der Ausnehmungen (35) in die Stirnseite (32c, 32d) an ihrer jeweiligen Mündung in den Ringraum (34) jeweils kleiner ist als die Hälfte der Differenz aus der Länge (I_{IR}) des Innenrings (32) und der Traglänge (I_{W}).

4. Tripoderoller (30) nach einem der Ansprüche 1 bis 3, **dadurch gekennzeichnet, dass** die Krümmung der Rillen (36) an den gegenüberliegenden Stirnseiten (32c, 32d) entgegengesetzt zueinander ist.

5. Tripoderoller (30) nach einem der Ansprüche 1 bis 4, **dadurch gekennzeichnet, dass** mindestens einer der Axialsicherungsringe (40) Ausnehmungen (41) zur Aufnahme von Schmiermittel aufweist und die Ausnehmungen (41) am Axialsicherungsring (40) an einer zu dem Innenring (32) weisenden Innenseite (40a) ausgebildet sind.

6. Tripoderoller (30) nach Anspruch 5, **dadurch gekennzeichnet, dass** die Ausnehmungen (41) am Axialsicherungsring (40) Radialrillen (42) umfassen, welche sich von einer Innenkante (43) des Axialsicherungsrings (40) radial zumindest bis auf Höhe des Ringraums (34) erstrecken.

7. Tripoderoller (30) nach Anspruch 5 oder 6, **dadurch gekennzeichnet, dass** die Ausnehmungen (41) am Axialsicherungsring (40) Axialnuten (44) umfassen, welche in den Ringraum (34) münden und schräg oder axial verlaufend an der Innenkante (43) des Axialsicherungsrings (40) ausgebildet sind.

8. Tripodegelenk (1), umfassend
einen Tripodestern (10) mit radial abstehenden Zapfen (12), wobei an jedem Zapfen (12) ein Tripoderoller (30) nach einem der vorgenannten Ansprüche gelagert ist, und
einen Tripodegehäuse (20) mit einem Laufbahnpaar (21) je Tripoderoller (30) zur Führung der ringförmigen Lauffläche (31a) des Außenrings (31) des jeweiligen Tripoderollers (30).

## Claims

1. Tripod roller (30) for a tripod joint (1), comprising
an outer ring (31) having an annular running surface (31a) on its outer circumference for rolling in a tripod housing (20) and an inner circumferential surface (31b), an inner ring (32) having an annular running surface (32a) on its inner circumference for mounting on a pin (12) of a tripod star (10), an outer circumferential surface (32b) and opposite end faces (32c, 32d),
rolling elements (33) which are arranged in an annular space (34) between the inner circumferential surface (31b) of the outer ring (31) and the outer circumferential surface (32b) of the inner ring (32) and via which the outer ring (31) is rotatably mounted with its inner circumferential surface (31b) on the outer circumferential surface (32b) of the inner ring (32), and
axial retaining rings (40) which are fixed to the outer ring (31) and secure the outer ring (31) axially relative to the inner ring (32),
wherein the inner ring (32) comprises recesses (35) for receiving lubricant on at least one of its end faces (32c, 32d), the recesses (35) on the outer circumferential surface (32b) of the inner ring (32) open into the annular space (34) in which the rolling elements (33) are arranged in order to supply the rolling elements (33) with lubricant, and furthermore, said recesses (35) on the outer circumferential surface (32b) of the inner ring (32) open into the inner circumferential surface (32a) of the inner ring (32),
**characterized in that**
the recesses (35) on the end face (32c, 32d) of the inner ring (32) are more deeply recessed into the end face (32c, 32d) of the inner ring (32) at their opening into the annular space (34) than at their opening into the inner circumferential surface (32a) of the inner ring (32); or
the recesses (35) on the end face (32c, 32d) of the inner ring (32) are designed as grooves (36), which are more deeply recessed into the end face (32c, 32d) at their opening into the inner circumferential surface (32a) of the inner ring (32) than at their opening into the annular space (34); and/or
the width of the grooves (36) decreases from the opening into the inner circumferential surface (32a) of the inner ring (32) to the opening into the annular space (34);
**or in that** the recesses (35) are designed as grooves (36) connecting the annular space (34) to the inner circumferential surface (32a) of the inner ring (32), which grooves are curved in an arcuate manner in a radial direction (r) of the inner ring (32).

2. Tripod roller (30) according to claim 1, **characterized in that** the bearing length (l_{W}) of the rolling elements (33) in the axial direction is smaller than the length (I_{IR}) of the inner ring (32) on its outer circumferential surface (32b) in the axial direction, **and in that** the depression (t) of the recesses (35) in the end face, at their relevant opening into the annular space, (34) is smaller than the difference between the length of the inner ring (32) and the bearing length (lw).

3. Tripod roller (30) according to claim 1, **characterized in that** the axially opposite end faces (32c, 32d) of the inner ring (32) are each equipped with recesses (35), the bearing length (I_{W}) of the rolling elements (33) in the axial direction is smaller than the length (I_{IR}) of the inner ring (32) on its outer circumferential surface (32b) in the axial direction, **and in that** the depression (t) of the recesses (35) in the end face (32c, 32d), at their relevant opening into the annular space (34), is in each case smaller than half the difference between the length (I_{IR}) of the inner ring (32) and the bearing length (I_{W}).

4. Tripod roller (30) according to any of claims 1 to 3, **characterized in that** the curvature of the grooves (36) is opposite to each other on the opposite end faces (32c, 32d).

5. Tripod roller (30) according to any of claims 1 to 4, **characterized in that** at least one of the axial retaining rings (40) has recesses (41) for receiving lubricant, and the recesses (41) on the axial retaining ring (40) are formed on an inner face (40a) facing the inner ring (32).

6. Tripod roller (30) according to claim 5, **characterized in that** the recesses (41) on the axial retaining ring (40) comprise radial grooves (42) which extend radially from an inner edge (43) of the axial retaining ring (40), at least to the level of the annular space (34).

7. Tripod roller (30) according to claim 5 or 6, **characterized in that** the recesses (41) on the axial retaining ring (40) comprise axial notches (44) which open into the annular space (34) and are formed so as to extend obliquely or axially on the inner edge (43) of the axial retaining ring (40).

8. Tripod joint (1), comprising
a tripod star (10) having radially projecting pins (12), wherein a tripod roller (30) according to any of the preceding claims is mounted on each pin (12), and
a tripod housing (20) having a pair of raceways (21) per tripod roller (30), for guiding the annular running surface (31a) of the outer ring (31) of the relevant tripod roller (30).

## Revendications

1. Galet tripode (30) pour une articulation tripode (1), comprenant
un anneau extérieur (31) comportant une surface de roulement annulaire (31a) sur sa périphérie extérieure pour le roulement dans un boîtier tripode (20) et comportant une surface périphérique intérieure (31b), un anneau intérieur (32) comportant une surface de roulement annulaire (32a) sur sa périphérie intérieure pour être supporté sur un tourillon (12) d'une étoile tripode (10) et comportant une surface périphérique extérieure (32b) et des faces frontales (32c, 32d) opposées,
des corps roulants (33) qui sont disposés dans un espace annulaire (34) entre la surface périphérique intérieure (31b) de l'anneau extérieur (31) et la surface périphérique extérieure (32b) de l'anneau intérieur (32) et par l'intermédiaire desquels l'anneau extérieur (31) est monté avec sa surface périphérique intérieure (31b) sur la surface périphérique extérieure (32b) de l'anneau intérieur (32) de manière à pouvoir tourner, et
des anneaux de blocage axial (40) qui sont fixés à l'anneau extérieur (31) et qui bloquent l'anneau extérieur (31) axialement par rapport à l'anneau intérieur (32),
dans lequel l'anneau intérieur (32) présente sur au moins l'une de ses faces frontales (32c, 32d) des évidements (35) destinés à recevoir du lubrifiant, les évidements (35) débouchent, sur la surface périphérique extérieure (32b) de l'anneau intérieur (32), dans l'espace annulaire (34) dans lequel les corps roulants (33) sont disposés afin d'alimenter les corps roulants (33) en lubrifiant, et en outre lesdits évidements (35) débouchent, sur la surface périphérique extérieure (32b) de l'anneau intérieur (32), dans la surface périphérique intérieure (32a) de l'anneau intérieur (32),
**caractérisé en ce que**
les évidements (35) sur la face frontale (32c, 32d) de l'anneau intérieur (32) sont plus enfoncés dans la face frontale (32c, 32d) de l'anneau intérieur (32) au niveau de leur embouchure dans l'espace annulaire (34) qu'au niveau de leur embouchure dans la surface périphérique intérieure (32a) de l'anneau intérieur (32) ; ou
les évidements (35) sur la face frontale (32c, 32d) de l'anneau intérieur (32) sont réalisés sous forme de rainures (36) qui sont plus enfoncées dans la face frontale (32c, 32d) au niveau de leur embouchure dans la surface périphérique intérieure (32a) de l'anneau intérieur (32) qu'au niveau de leur embouchure dans l'espace annulaire (34) ; et/ou
la largeur des rainures (36) diminue depuis l'embouchure dans la surface périphérique intérieure (32a) de l'anneau intérieur (32) jusqu'à l'embouchure dans l'espace annulaire (34) ;
**ou en ce que** les évidements (35) sont réalisés sous forme de rainures (36) reliant l'espace annulaire (34) à la surface périphérique intérieure (32a) de l'anneau intérieur (32), lesquelles rainures sont courbées en forme d'arc par rapport à une direction radiale (r) de l'anneau intérieur (32).

2. Galet tripode (30) selon la revendication 1, **caractérisé en ce que** la longueur de portée (I_{W}) des corps roulants (33) dans la direction axiale est inférieure à la longueur (I_{IR}) de l'anneau intérieur (32) au niveau de sa surface périphérique extérieure (32b) dans la direction axiale, **et en ce que** la profondeur (t) des évidements (35) dans la face frontale au niveau de leur embouchure respective dans l'espace annulaire (34) est inférieure à la différence entre la longueur de l'anneau intérieur (32) et la longueur de portée (lw).

3. Galet tripode (30) selon la revendication 1, **caractérisé en ce que** les faces frontales (32c, 32d) de l'anneau intérieur (32) axialement opposées l'une à l'autre sont respectivement pourvues d'évidements (35), la longueur de portée (I_{W}) des corps roulants (33) dans la direction axiale est inférieure à la longueur (I_{IR}) de l'anneau intérieur (32) au niveau de sa surface périphérique extérieure (32b) dans la direction axiale, **et en ce que** la profondeur (t) des évidements (35) dans la face frontale (32c, 32d) au niveau de leur embouchure respective dans l'espace annulaire (34) est respectivement inférieure à la moitié de la différence entre la longueur (I_{IR}) de l'anneau intérieur (32) et la longueur de portée (Iw).

4. Galet tripode (30) selon l'une des revendications 1 à 3,
**caractérisé en ce que** les courbures des rainures (36) sur les faces d'extrémité (32c, 32d) opposées sont opposées l'une à l'autre.

5. Galet tripode (30) selon l'une des revendications 1 à 4,
**caractérisé en ce qu'**au moins l'un des anneaux de blocage axial (40) présente des évidements (41) destinés à recevoir un lubrifiant et les évidements (41) sont réalisés sur l'anneau de blocage axial (40) sur une face intérieure (40a) tournée vers l'anneau intérieur (32).

6. Galet tripode (30) selon la revendication 5, **caractérisé en ce que** les évidements (41) sur l'anneau de blocage axial (40) comprennent des rainures radiales (42) qui s'étendent radialement depuis un bord intérieur (43) de l'anneau de blocage axial (40) au moins jusqu'à la hauteur de l'espace annulaire (34).

7. Galet tripode (30) selon la revendication 5 ou 6, **caractérisé en ce que** les évidements (41) sur l'anneau de blocage axial (40) comprennent des rainures axiales (44) qui débouchent dans l'espace annulaire (34) et qui sont réalisées en oblique ou en s'étendant axialement sur le bord intérieur (43) de l'anneau de blocage axial (40).

8. Articulation tripode (1), comprenant
une étoile tripode (10) comportant des tourillons (12) faisant saillie radialement, dans laquelle un galet tripode (30) selon l'une des revendications précédentes est monté sur chaque tourillon (12), et
un boîtier tripode (20) comportant une paire de chemins de roulement (21) par galet tripode (30) pour le guidage de la surface de roulement annulaire (31a) de l'anneau extérieur (31) du galet tripode (30) respectif.
